# DEMANDE DE BREVET EUROPEEN

(11) **EP 0 989 475 A1**
(43) Date de publication de la demande: **29.03.2000**
(21) Numéro de dépôt: 99402308.3
(22) Date de dépôt: 21.09.1999
(51) Int. Cl.: G05B 19/418, G05B 19/042

(54) **Dispositif d'interface pour relais de protection électrique d'un système de conduite de procédé et installation équipée d'un tel dispositif**

(30) Priorité: 24.09.1998 FR 9811940
(71) Demandeur: Alstom Centrales Energetiques SA, 75 116 Paris (FR)
(72) Inventeur: Denner, Jean, 91 620 Nozay (FR)
(74) Mandataire: Gosse, Michel

(57) **Abrégé**

L'invention concerne un dispositif d'interface pour relais (2) de protection électrique d'une installation industrielle dotée d'un système de conduite de procédé comportant des unités d'exploitation (3) qui communiquent entre elles selon un protocole de communication déterminé (P2) par l'intermédiaire d'au moins un réseau, dans une architecture de communication en temps partagé pour la commande de l'installation. Elle concerne aussi les installations équipées de ce dispositif.

Celui-ci est doté de moyens matériels de connexion (0, 0') lui permettant de se relier séparément aux relais et à un réseau de desserte d'unités de l'architecture, il comporte aussi des moyens logiciels de conversion lui permettant de transmettre à destination d'une unité et selon le protocole (P2) exploité par les unités, des informations qui lui ont été transmises par les relais selon un protocole différent (P1) et inversement.

## Description

L'invention concerne un dispositif d'interface pour relais de protection électrique d'une installation industrielle incluant un système de conduite de procédé. Elle concerne aussi les installations industrielles équipées d'un tel dispositif.

Comme il est connu, les relais de protection électrique mis en oeuvre dans les installations recevant, produisant et/ou distribuant de l'énergie sous forme électrique sont généralement des dispositifs électroniques qui permettent de mesurer des variables électriques afin de commander le déclenchement de disjoncteurs, en cas de défaut électrique et qui fournissent des informations relatives au fonctionnement. Un déclenchement a pour objet de mettre hors tension une section d'un réseau d'alimentation en énergie d'une installation pour protéger celle-ci, par exemple en cas de surtension et/ou de surintensité dangereuse survenant au niveau de la section.

La mise hors tension d'une section de réseau d'alimentation dans une installation complexe en fonctionnement est une opération dont il est nécessaire de bien déterminer la portée et les effets potentiels, car les conséquences peuvent être lourdes, voire catastrophiques. Il est donc usuel de rassembler les informations fournies par les relais de protection électrique d'une installation au niveau d'un poste de commande central de l'installation où sont prévus des moyens permettant d'obtenir une vision globale du fonctionnement de l'installation et en particulier de la situation révélée par les relais de protection électrique qui sont disséminés dans l'installation. Pour diverses raisons et en particulier en raison de l'hétérogénéité des moyens susceptibles d'être utilisés dans le cadre d'une conduite de procédé dans une installation industrielle, il est souvent nécessaire d'exploiter simultanément des relais de protection électrique sensiblement différents. Il a donc été longtemps considéré comme judicieux de relier les relais de protection électrique d'une installation au poste de commande central par des liaisons filaires individualisées, ces liaisons étant munies de circuits individuels d'interface à au moins une de leurs deux extrémités.

Toutefois ceci n'est pas très satisfaisant, lorsque l'installation peut faire l'objet de modifications au cours du temps et que des dispositifs nouveaux sont susceptibles d'être substitués à d'autres plus anciens, dans la mesure où les câblages et/ou interfaces d'adaptation en place peuvent ne plus convenir. De plus, les modifications matérielles apportées dans de tels cas peuvent aussi conduire à la réalisation de modifications logicielles.

Une norme, telle que la norme IEC870.5 - CS103, a donc été établie pour normaliser les procédures de communication pour les relais de protection électrique.

Par ailleurs, les systèmes industriels de conduite de procédé actuels sont généralement équipés d'une architecture de communication qui permet des transmissions en temps partagé d'informations numérisées entre des unités d'exploitation programmées du système pour la commande de l'installation. Cette architecture de communication est notamment susceptible d'être constituée autour d'un réseau ou de plusieurs réseaux interconnectés, elle comprend généralement au moins un réseau de terrain. Lorsqu'il existe plusieurs réseaux, ceux-ci unissent entre elles des unités d'exploitation programmées usuellement réparties par niveaux suivant leurs fonctions opérationnelles respectives, avec généralement au moins un niveau regroupant les ou des unités d'entrée/sortie de procédé et un niveau de conduite et de supervision de procédé qui est constitué par au moins une unité. Par contre, le réseau formé par les liaisons desservant des relais de protection électrique n'est pas compris dans l'architecture de communication évoquée ci-dessus car il n'applique pas les mêmes protocoles de communication. En effet, pour diverses raisons, la normalisation en matière de communication pour les relais de protection est en avance sur celle qui concerne les communications entre unités d'une installation industrielle. Il n'est donc actuellement pas possible d'avoir une solution globale de communication incluant la conduite automatique de procédé, le contrôle du système électrique et le contrôle des sous-stations.

Pour remédier à ces inconvénients, la présente invention propose donc un dispositif d'interface pour relais de protection électrique d'une installation industrielle dotée d'un système de conduite de procédé comportant des unités d'exploitation programmées qui communiquent entre elles selon un protocole de communication déterminé par l'intermédiaire d'au moins un réseau, dans une architecture de communication en temps partagé pour la commande de l'installation.

Selon une caractéristique de l'invention, le dispositif d'interface comporte des moyens matériels de connexion lui permettant de se relier séparément, d'une part, aux relais et, d'autre part, à un réseau de desserte d'unités de l'architecture à des fins de transmission d'information, ainsi que des moyens logiciels de conversion lui permettant de transmettre à destination d'au moins une unité et selon le protocole communément exploité par les unités entre elles, des informations qui lui ont été transmises par les relais selon un protocole différent exploité par ces relais, et inversement de transmettre, à destination des relais et selon le protocole exploité par les relais, des informations qui lui ont été transmises par au moins une unité selon le protocole commun aux unités.

L'invention concerne aussi une installation industrielle comportant un système de conduite de procédé et un ensemble de relais de protection électrique, ledit système comportant des unités d'exploitation programmées qui communiquent entre elles selon un protocole de communication déterminé par l'intermédiaire d'au moins un réseau dans une architecture de communication en temps partagé pour la commande des organes dans le cadre de l'exploitation du procédé.

Selon une caractéristique de l'invention, l'invention comporte au moins un dispositif tel que décrit ci-dessus.

Selon une caractéristique d'une variante de l'invention, l'installation comporte au moins un dispositif d'interface relié à un réseau de terrain de l'architecture de l'installation qui dessert au moins certaines des unités d'entrée/sortie de procédé du système de conduite et au moins une unité de niveau supérieur de ce système. L'invention, ses caractéristiques et ses avantages sont précisés dans la description qui suit en liaison avec les figures évoquées ci-dessous.

La figure 1 présente un schéma de principe relatif à un dispositif d'interface pour ensemble de relais de protection électrique, selon l'invention.

La figure 2 présente un schéma de principe d'une architecture de communication liée à un système de conduite de procédé d'une installation industrielle et comportant un dispositif d'interface selon l'invention.

Le dispositif d'interface 1 selon l'invention est supposée constituée par une unité programmée organisée autour d'au moins un processeur, d'un ensemble de mémoires mortes et/ou vives et d'équipements auxiliaires, tels que notamment des coupleurs d'entrée/sortie. Il est destiné à assurer la transmission d'informations numérisées fournies ou destinées à un ensemble de relais de protection électrique 2 d'une installation industrielle disposant d'un système de conduite de procédé qui comporte au moins une unité d'exploitation programmée 3 avec laquelle les informations sont échangées.

Le dispositif d'interface est doté de moyens matériels de connexion appropriés 0, 0', par exemple des connecteurs débrochables, qui lui permettent de se relier les uns aux relais de protection 2 et les autres à un élément de liaison, par exemple à un bus, constituant un réseau de desserte par l'intermédiaire duquel il peut communiquer avec la ou les unité(s) programmée(s) 3.

Ces moyens de connexion, qui doivent être adaptés en fonction des configurations matérielles de communication impliquées, ne sont pas développés ici dans la mesure où ils sont bien connus de l'homme de métier.

Comme indiqué plus haut les échanges d'information à partir des relais ou vers des relais s'effectuent selon un protocole spécialisé qui leur est propre.

Ce protocole de communication spécialisé, ici référencé P1 est ici supposé être le protocole qui est défini par la norme IEC870.5 - CS103 évoquée plus haut.

Le protocole de communication P2 exploité par une unité programmée 3 est supposé différent, car les besoins en matière de communication entre unités programmées 3 ne sont pas les mêmes que ceux des relais.

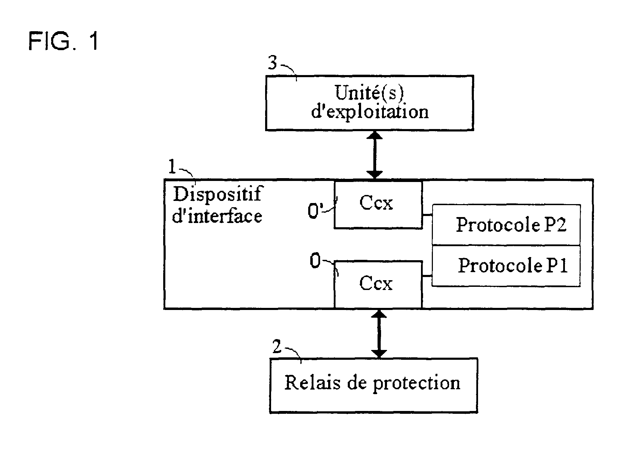

Il est donc nécessaire de prévoir une passerelle de conversion de protocoles qui est ici réalisée au niveau du dispositif d'interface 1 représenté intercalé entre les relais 2 et une unité programmée 3 en figure 1. La passerelle que constitue ce dispositif d'interface permet par exemple des transmissions de données d'automatisation organisées de manière périodique, des transmissions de valeurs de mesure à des fins de supervision, des transmissions d'informations de synchronisation destinées aux relais 2, des transmissions de messages chronologiquement identifiés notamment à des fins de supervision. Les messages peuvent être des messages de configuration ou de paramétrage des relais qui sont transmis à partir d'une unité programmée 3.

Les informations de synchronisation fournissent une référence horaire commune aux différents relais pour leur permettre de dater les informations qu'ils transmettent, en particulier en cas de détection d'un événement. Les messages sont donc datés au niveau de l'installation avec une précision horaire choisie pour permettre de déterminer l'ordre de succession d'événements détectés par différents relais dans le cas d'une réaction en chaîne. Une identification chronologique à la milliseconde près est par exemple prévue.

Les informations fournies par les relais 2 selon le protocole P1 et à destination d'une unité programmée 3 sont prises en compte par le dispositif d'interface 1 qui est programmé pour les présenter de la manière requise selon le protocole P2. Une opération inverse est réalisée pour les informations émises par une unité programmée 3 de la manière requise par le protocole P2 et à destination des relais. Les moyens logiciels de conversion nécessaires à ces opérations de passage d'un protocole à un autre ne sont pas décrits ici dans la mesure où ils dépendent des caractéristiques propres à chacun des protocoles P1 et P2 choisis et où leur réalisation relève de la mise en oeuvre de techniques habituelles pour l'homme de métier.

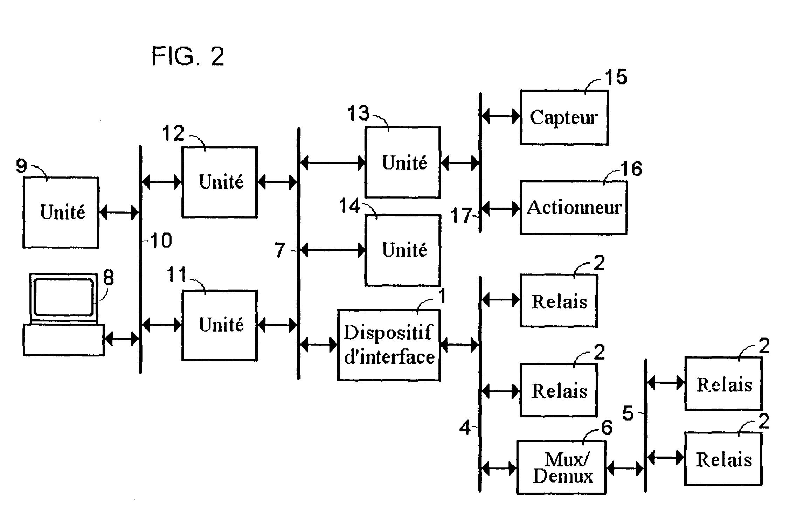

La figure 2 présente un exemple non limitatif d'une architecture de communication d'un système de conduite de procédé pour installation industrielle dans laquelle il est prévu d'inclure un dispositif d'interface 1 selon l'invention pour servir de passerelle entre les relais de protection électrique 2 de l'installation et au moins une des unités programmées 3 de l'installation.

Le dispositif d'interface 1 correspond à celui décrit en relation avec la figure 1, comme déjà indiqué plus haut, des relais de protection électrique 2 présentant éventuellement des différences sont susceptibles d'être prévus au niveau de l'installation, ils ont pour caractéristique commune d'être programmés pour pouvoir exploiter le protocole de communication P1, tel que défini par la norme IEC870.5 - CS103.

Ces relais 2 sont choisis en fonction des besoins dans l'installation. Ce sont par exemple des relais de protection EPAC 3000 de la Société ALSTOM, ou des relais de protection de surcharge de ligne REC316 et des relais de protection différentielle de transformateur RET316 de la Société ABB.

Les relais 2 sont ici reliés à un réseau local de protection 4 qui leur est propre et qui est par exemple de type bus optique ou de type liaison de transmission électrique RS 485.

Au moins certains d'entre eux peuvent éventuellement être reliés, via un réseau auxiliaire 5 à un équipement concentrateur/déconcentrateur 6 intercalé entre le réseau local de protection 4 et le réseau auxiliaire 5. Cet équipement est par exemple type multiplexeur/ démultiplexeur.

Le dispositif d'interface 1 est ici supposé intercalé entre le réseau local de protection 4 et un réseau de terrain 7 de l'architecture de communication entre unités programmées dans l'installation industrielle considérée.

Cette architecture de communication est par exemple réalisée sur la base d'un réseau standardisé WORLDFIP, tel que le réseau F8000 de la demanderesse. Ce réseau, tel que présenté sur la figure 2, est prévu pour intégrer trois niveaux de fonctions opérationnelles où des unités d'exploitation programmées sont distribuées. Ces niveaux correspondent à un niveau de conduite et de supervision de procédé, un niveau intermédiaire d'automatisation du procédé et un niveau d'entrée/sortie de procédé.

Les unités d'exploitation programmées du niveau supérieur de conduite et de supervision de procédé sont ici représentées par une unité 8 correspondant par exemple à une plate-forme opérateur de conduite et de supervision de procédé ou à une station principale d'opérateur de supervision, et une unité 9 correspondant par exemple à un calculateur de procédé. L'unité 8 est ici supposée apte à échanger des informations avec les relais de protection électrique 2, via le dispositif d'interface auquel cette unité 8 est reliée dans les conditions évoquées ci-dessous. Les unités du niveau supérieur sont reliées à un réseau de communication 10 de l'architecture de communication de l'installation. Ce réseau est par exemple un réseau de type Ethernet et en particulier un réseau ALSPA S8000 de la demanderesse. Il permet aux unités de niveau supérieur de communiquer en exploitant le protocole P2, d'une part entre elles et d'autre part avec des unités du niveau immédiatement inférieur, ici symbolisées par deux unités 11 et 12 qui sont aussi reliées à ce réseau. Sur la figure 2 deux unités de niveau intermédiaire ont été représentées à titre d'exemple, l'une est une unité 11 faisant fonction de routeur et permettant des échanges entre dès unités, telles 8 et 1, qui sont situées à des niveaux différents et qui exploitent le même protocole P2 pour leurs échanges d'information. L'autre unité 12 est par exemple un contrôleur d'automatisme pour applications d'automatisme séquentiel ou un contrôleur d'électronique de puissance programmé ou autre.

Les unités de niveau d'entrée/sortie de procédé sont susceptibles d'être très diverses, elles sont ici symbolisées par deux unités 13 et 14 qui sont reliés au même réseau de terrain 7 que le dispositif d'interface 1, celui-ci étant donc assimilé ici à une unité d'entrée/sortie. Les unités symbolisés par 13 sont par exemple des capteurs ou des actionneurs dits intelligents, des unités de commande de variateurs de vitesse. Les unités symbolisés par 14 sont par exemple des unités d'entrée/sortie permettant une mise en communication d'organes de l'installation qui interviennent dans l'exploitation du procédé. Ces organes sont par exemple des capteurs 15 et/ou actionneurs 16 classiques qui sont ainsi mis en liaison avec un contrôleur approprié du niveau d'automatisation de procédé. Dans l'exemple présenté, les capteurs et actionneurs sont supposés communiquer avec l'unité 13 qui les dessert par l'intermédiaire d'un bus 17 qui est par exemple constitué par un câble électrique composé de paires blindées.

Bien entendu, les unités évoquées ci-dessus ne sont signalées qu'à titre d'exemple et les niveaux indiqués plus haut peuvent éventuellement être réduits en nombre par regroupement de fonctions d'un niveau avec des fonctions d'un autre dans des unités d'exploitation organisées de manière appropriée.

Il est donc possible de disposer conjointement des informations fournies par les relais de protection électrique en plus des informations concernant l'alimentation en énergie électrique nécessaire au fonctionnement et des informations relatives au fonctionnement du système de conduite de procédé, dans une installation intégrant un dispositif d'interface 1 tel que défini ci-dessus. Ceci offre donc de grands avantages en matière de gestion en temps réel dans la mesure où l'exploitant d'une installation peut ainsi disposer des diverses informations dont il a besoin sous des formes standardisées qui peuvent éventuellement être affichées sur un même écran bien qu'elles soient d'origine différentes. Il est aussi possible à l'exploitant d'intervenir au niveau des relais de protection, notamment pour des modifications de paramètres et des mises à jour de configuration, dans les mêmes conditions que pour les autres unités d'entrée/sortie que symbolisent les unités 13 et 14 sur la figure 1. Ceci peut être réalisé depuis toute unité d'exploitation qui est programmée pour permettre de telles actions, ou éventuellement depuis un ordinateur externe et éventuellement distant que l'on relie par une liaison appropriée à l'une des unités ou à l'un des réseaux prévus dans l'architecture du système.

## Revendications

1. Dispositif d'interface pour relais (2) de protection électrique d'une installation industrielle dotée d'un système de conduite de procédé comportant des unités d'exploitation programmées (8, 9, 11, 12 13, 14) qui communiquent entre elles selon un protocole de communication déterminé (P2) par l'intermédiaire d'au moins un réseau (7), dans une architecture de communication en temps partagé pour la commande de l'installation, caractérisé en ce qu'il comporte des moyens matériels de connexion (0, 0') lui permettant de se relier séparément, d'une part, aux relais et, d'autre part, à un réseau de desserte d'unités de l'architecture à des fins de transmission d'information, ainsi que des moyens logiciels de conversion lui permettant de transmettre à destination d'au moins une unité et selon le protocole (P2) communément exploité par les unités entre elles, des informations qui lui ont été transmises par les relais selon un protocole différent (P1) communément exploité par ces relais, et inversement de transmettre, à destination des relais et selon le protocole communément exploité par les relais, des informations qui lui ont été transmises par au moins une unité selon le protocole commun aux unités.

2. Installation industrielle comportant un système de conduite de procédé et un ensemble de relais (2) de protection électrique, ledit système comportant des unités d'exploitation programmées (8, 9, 11, 12 13, 14) qui communiquent entre elles selon un protocole de communication déterminé (P2) par l'intermédiaire d'au moins un réseau (7) dans une architecture de communication en temps partagé pour la commande de l'installation, caractérisé en ce que ladite installation comporte au moins un dispositif d'interface doté de moyens matériels de connexion (0, 0') lui permettant de se relier séparément, d'une part, aux relais et, d'autre part, à un réseau de desserte d'unités de l'architecture à des fins de transmission d'information, ainsi que des moyens logiciels de conversion lui permettant de transmettre à destination d'au moins une unité et selon le protocole (P2) communément exploité par les unités entre elles, des informations qui lui ont été transmises par les relais selon un protocole différent (P1) communément exploité par ces relais, et inversement de transmettre, à destination des relais et selon le protocole communément exploité par les relais, des informations qui lui ont été transmises par au moins une unité selon le protocole commun aux unités.

3. Installation, selon la revendication 2, dans lequel un dispositif d'interface (1) pour relais (2) de protection électrique est relié à un réseau de terrain (7) de l'architecture de l'installation qui dessert au moins certaines des unités d'entrée/sortie de procédé (13, 14) du système de conduite et au moins une unité (11, 12) de niveau supérieur de ce système.
